# EUROPEAN PATENT APPLICATION

(11) **EP 2 128 812 A1**
(43) Date of publication of application: **02.12.2009**
(21) Application number: 08157302.4
(22) Date of filing: 30.05.2008
(51) Int. Cl.: G06Q 40/00

(54) **Exchange traded fund trading system**

(71) Applicant: Mustique Capital Holding S.A., 1025 Luxemburg (LU)
(72) Inventor: Lindström, Björn, London W8 5AR (GB); Saard, Katre, London W8 5AR (GB); Berglund, Oscar, London W2 3UY (GB)
(74) Representative: Holmberg, Nils Anders Patrik

(57) **Abstract**

Computerized trading system adapted to handle trading of Exchange Traded Funds (ETFs), where each ETF comprises portfolio securities represented by portfolio security data entities stored in a portfolio trading database, the system further comprises a control device connected to, and controlling, said portfolio trading database, at least one market participant input device, and a fund manager input device both being connectable to the control device. Each input device being connected to a display device provided with a graphical user interface, wherein the market participant input device(s) is/are adapted to receive transaction orders from market participants and to transfer said orders in the form of transaction signals to said control device that initiates and performs said transactions. The portfolio security data entities are divided into disclosed portfolio data entities being accessible via the at least one market participant graphical user interface, and non-disclosed data entities only being accessible via the fund manager graphical user interface, wherein the relationship, denoted as the portfolio disclosure ratio (PDR), between the disclosed portfolio data entities and the portfolio security data entities, is in the range of 60-90%. The control device comprises a disclosure filtering means controlled via input signals from the fund manager input device to determine which portfolio data entities to be disclosed portfolio data entities, and which portfolio data entities to be non-disclosed data entities.

## Description

### Field of the invention

The present invention relates to a computerized Exchange Traded Fund (ETF) trading system, and a computer program product for use in a computerized Exchange Traded Fund trading system according to the preambles of the independent claims.

### Background of the invention

In order to fully understand the present invention a general introduction to Exchange Traded Funds (ETFs) is given in the following.

### Overview of ETFs

An ETF is a vehicle which holds a basket of securities and is split up in many small units, usually called ETF shares, which are traded on an exchange or securities market. The ETF shares are akin to stocks; they represent an ownership interest in the underlying portfolio of securities, they are listed on a stock exchange and can as any other stock be bought or sold directly on that exchange during trading hours. Since ETF shares are traded on the stock exchange there is minimal direct interaction between the investors in the ETF shares and the fund manager which manages the underlying basket of securities (typically called the fund portfolio).

The absolute majority of ETFs have to date been passively managed. Passive management means that the fund manager attempts to replicate the performance of a pre-determined benchmark index. This is in contrast with active management which entails the fund manager picking securities independently of any index in order to maximise the fund portfolio performance given certain restrictions. Hence a passively managed ETF invests strictly in the securities which comprise its benchmark index in the same proportion as their capital weighting in that benchmark index (e.g. Standard & Poor's 500 or FTSE 100).

The intrinsic value of an ETF share is the equivalent of the value of the underlying portfolio of securities in the fund, net of any liabilities, divided by the number of ETF shares outstanding. This intrinsic value is referred to as the "Net Asset Value" ("NAV") and is normally calculated on a daily basis by a party independent of the fund manager, typically the custodian. The NAV can also be calculated at any time during the trading day, and is then referred to as intraday NAV. For index tracking ETFs, it is possible to make an estimate of the intraday NAV by observing how the underlying index is developing and assume that the development in value of the ETF share is mirroring the underlying index.

### ETFs vs. Conventional mutual funds

Both ETFs and conventional so called mutual funds offer investors an opportunity to invest in an assortment of securities through a single avenue. However, there are fundamental differences in how they function;
1) An investor in a mutual fund buys and sells fund units directly from the fund. In case of an ETF, only so called Market Participants ("MPs") are normally able to interact with the fund directly. This interaction takes place in the so called primary market. MPs, which are typically investment banks, also act as market makers in the ETF shares on the secondary market (the stock exchange) and through this dual role they make up a link between the fund and the secondary market. MPs subscribe for new ETF shares and redeem existing ETF shares with the fund depending on the demand and supply of ETF shares in the secondary market. Such subscriptions and redemptions are done in a predefined large number of individual ETF shares, a so called creation/redemption unit. The exact mechanism of subscriptions and redemptions will be reviewed in more detail later.
   Individual investors in ETF shares hence do not interact directly with the fund but buy and sell ETF shares in the secondary market (stock exchange) through a broker. The trading on the secondary market will to a large extent be made up of investors buying and selling ETF shares from and to each other without the active involvement of the MP, meaning that these transactions do not drive any transactions in the primary market and hence have no impact on the contents of the underlying portfolio.
2) Since ETF shares are traded on the stock exchange, they can as previously mentioned be bought and sold at any time during market hours. This feature allows investors to take advantage of "real time pricing" as they can transact at the market price prevailing at any one point of time during the trading day. This is in contrast to mutual funds, wherein units can be bought and redeemed with the fund only at the relevant NAV which is typically calculated daily after the end of trading. In order to transact with the mutual fund at the NAV, investors need to make their formal application to buy or sell units before a cut-off time prior to the time the NAV is calculated. In principle, this means that investors who are looking to buy or sell units in a mutual fund do not know the exact NAV which they are going to pay or receive for the units but NAVs are set only after investors have decided to transact, a phenomenon called "forward pricing".
3) ETFs are typically associated with low expense ratios vis-a-vis mutual funds. The lower expense ratios are mainly explained by three factors:
   - Through the creation and redemption process of ETF shares in the primary market, the fund typically takes delivery of (in the case of a subscription by an MP) and delivers (in the case of a redemption by the MP) securities in kind, as opposed to cash. Hence, the fund has minimal transaction costs. Subscriptions and redemptions of units in mutual funds are on the other hand settled in cash, implying that the fund will suffer the costs associated with converting the cash into securities in the case of subscriptions, and vice versa in the case of redemptions, held in the portfolio.
   - Mutual funds may charge investors subscription and redemption fees. ETFs do not have these fees. However, investors in ETF shares will normally as for any other stock have to pay commission to their brokerage when buying or selling ETF shares in the secondary market, as well as being subject to a spread between bid and ask prices for the ETF shares.
   - As previously mentioned, ETFs are typically index-tracking products. Employing an index-tracking strategy is cheaper than employing an active management strategy according to which an investment management team spends time and effort trying to identify securities which are expected to offer superior risk-reward characteristics compared to the market in general.
4) While mutual funds are always available to investors at the end-of-day NAV, ETF shares in the secondary market do not necessarily trade at the intraday NAV per share of their underlying portfolio. The market price of an ETF share is determined by demand and supply factors which may make it deviate from the value of its underlying portfolio securities. As a consequence of the MP being a link between the primary and secondary market and hence being able to arbitrage discrepancies between the intraday NAV and the market price of the ETF shares (this will be reviewer in more detail later), an ETF share's market price should closely reflect the intraday NAV per ETF share but the possibility of an ETF share trading below (at a discount) or above (at a premium) its intraday NAV does exist.
5) Since ETF shares are liquid securities which are bought and sold on the stock exchange like any other stocks, they tend to be accepted as collateral, enabling investors in ETF shares to raise leverage.
6) ETF shares can like other stocks in the market be sold short. Selling short suggests an investor borrowing shares and then selling them in the market in the expectation that the share price will depreciate, allowing for the shares to be bought back at a lower price before being delivered back to the lender, hence leaving the short seller with a profit.

### Mechanics of ETF Share Creation

ETF shares can be created and redeemed on a daily basis in the primary market in which MPs are interacting with the fund. Whereas all investors are able to trade existing ETF shares on stock exchanges (i.e. in the secondary market) only MPs are as previously mentioned active in the primary market.
The trading carried out by MPs in the primary market benefits all investors in the secondary market by helping to keep ETF share prices close to their intraday NAVs through the potential for MPs to arbitrage any discrepancy between the price of the ETF shares and the value of the underlying securities (the intraday NAV). This arbitrage opportunity will be described in more detail later.
Investors buying and selling ETF shares on the stock exchange (the secondary market) can, if they choose, trade just one share in an ETF fund. However, when ETF shares are created or redeemed by MPs in the primary market, all trades are made in blocks consisting of a predetermined number of ETF shares. These blocks are referred to as creation units (in the context of a subscription by an MP) and redemption units (in the context of a redemption by an MP). Through the bundling of individual ETF shares into units, the administrative costs connected to subscriptions and redemptions are diminished.

### ETF shares are typically created and redeemed through an in-kind transfer in which MPs and the ETF fund swap securities for ETF units in the following way:

If an MP wants to subscribe for new ETF shares, it delivers to the fund a block of securities that in case of a passively managed index-tracking ETF is equivalent to the component shares making up the benchmark index (the number of shares are for practical trading reasons rounded). The MP also delivers a small cash component to the fund to reflect any cash holdings in the fund and claims such as dividends awaiting payment.
In return, the fund delivers an ETF creation unit to the MP. Upon receipt of the unit, the MP can start selling the individual ETF shares in the secondary market in which it acts as market maker.
The reverse process, in which ETF shares are redeemed by the MP, is done in an analogous way. The MP transfers a number of redemption units to the fund in exchange for securities and cash and the fund subsequently cancels the ETF shares.

As previously mentioned, this process reduces the fund's operating expenses since it does not have to bear the transaction costs related to purchasing and selling securities in the open market. Instead, the fund delivers and takes delivery of securities in kind to/from the MP which means that the costs of acquiring and disposing the securities in the open market are born by the MP as opposed to the fund.

By way of comparison, consider the process for creating and redeeming units in traditional mutual funds. As previously described, in open-ended funds, investors purchase and redeem units in cash from the fund directly. Depending on whether an investor buys or sells units, the fund manager will receive or pay out cash. Consequently the fund manager will have to buy or sell securities to/from the underlying portfolio of the fund in response to sizeable subscriptions/redemptions. The trading of securities on behalf of the fund carries transaction costs, implying reduced returns.

### Arbitrage opportunities in ETF shares

If ETF shares trade at a premium or discount to the underlying value of their portfolio, MPs can through their ability to participate in both the primary and secondary market exploit the discrepancy and make a risk free profit, a so called arbitrage. In practice, it works in the following ways.

If ETF shares are trading above their intraday NAV, an MP can sell short the ETF shares corresponding to the number of ETF shares in an ETF creation unit and simultaneously acquire the underlying portfolio securities, deliver the underlying portfolio securities and a cash component to the fund and in return receive an ETF creation unit. The ETF shares making up the creation unit are sold in the secondary market until the additional supply from the MP's selling of ETF shares in the market makes its market price converge with its intraday NAV.

If an ETF share on the other hand is trading below its intraday NAV, an MP can acquire the ETF shares corresponding to the number of ETF shares in an ETF redemption unit in the secondary market and simultaneously sell short the underlying securities. The ETF shares acquired in the secondary market can then be bundled into a unit and redeemed with the fund whereby the MP receives the underlying securities and a cash component in return. The MP can use the underlying securities received from the fund to offset its short position.

This continual balancing of supply and demand for ETF shares enables a close correlation between the market price of ETF shares and the value of the underlying securities in the portfolio.

The easiest way to understand this mechanism for the MP to make an arbitrage between the primary and secondary market is with a hypothetical example. Consider the case of a MP making a market in an ETF which is tracking the European DJ Euro STOXX 50 index. The MP observes a price differential between the DJ Euro STOXX 50 ETF share in the secondary market and the value of its underlying portfolio securities. Because the ETF shares and the component stocks of their underlying portfolio are fungible through the creation/redemption process, this differential provides an arbitrage opportunity as illustrated below.

| **Security** | **Current Market Price** | **Number of Securities in one Creation/ Redemption Unit** | **Market Value** |
|---|---|---|---|
| DJ Euro STOXX 50 ETF share | €101.25 | 250,000 | €25,312,500 |
| Intraday NAV | €100.25 | | |
| | | | |
| Security 1 | €23.25 | 245 | €5,696 |
| Security 2 | €35.25 | 89 | €3,137 |
| Security 3 | €89.50 | 123 | €11,009 |
| ... | | | |
| Security 50 | €105.00 | 43 | €4,515 |
| | | | €25,062,500 |
| Arbitrage Profit Potential | (€101.25-€100.25) | x 250,000 = | €250,000 |

In this hypothetical example, the DJ Euro STOXX 50 ETF share is trading at a one-point premium to the intraday NAV of the underlying DJ EURO STOXX 50.
The MP implements the following transactions to capitalise on the pricing disparity:
- Sell 250,000 DJ Euro STOXX 50 ETF shares at a price of €101.25 each, proceeds: €25,312,500.
- Simultaneously buy the requisite number of underlying securities to replicate the portfolio, cost: €25,062,500.
- Place a creation order for one unit of the DJ Euro STOXX 50 fund (250,000 ETF shares).
At the settlement date, in this case three business days after the initial transactions, all the transactions are netted out with the result that the MP makes a €250,000 arbitrage profit:
- The MP takes delivery of the underlying securities which the MP acquired on the secondary market in return for cash.
- The MP delivers the underlying securities corresponding to one creation unit to the fund in return for a creation unit of ETF shares.
- The MP delivers the ETF shares in the creation unit to the investors who acquired the ETF shares from the MP on the secondary market in return for cash.

These actions allows the MP to make an arbitrage by effectively selling ETF shares in the market at a price which is higher than the price at which the MP at the same time is buying identical ETF shares from the fund. The MP will in theory continue exploiting this price discrepancy until the prices converge, while in practice the possibility may be impaired due to transaction costs, logistical and trading related constraints.

### Actively Managed ETFs

ETF funds have to date exclusively been subject to passive management strategies, i.e. the fund manager has been trying to track a predetermined index. The main reason for the lack of actively managed ETFs is the fact that the in-kind creation and redemption process depends on the fund being transparent with regards to the underlying securities making up the fund portfolio since in order to execute in-kind transactions in the primary market, MPs need to know the composition of the underlying portfolio.

An actively managed ETF would encounter two serious problems if it like index tracking ETFs would disclose its full portfolio on a daily basis:
- The fund would be exposed to front running. Front running implies that one investor has access to the future trading strategy of another investor and takes advantage of that by making the same trade first. If e.g. a fund manager is gradually building up a position in a small illiquid stock (a process which can take weeks) which has been identified after time-consuming research efforts, other investors can, upon seeing that the fund manager is building this position, take advantage of this knowledge by buying the stock aggressively before the portfolio manager has built up his/her position.
- The fund would be exposed to replication. Other investors could replicate the portfolio on a daily basis by buying the underlying securities of the portfolio in the market, thereby taking advantage of the fund manager's skills and effort without paying the management fee. In theory, other investors could in addition to replicating the portfolio also short the ETF shares of the actively managed ETF, i.e. engage in a riskless arbitrage in which the investor would make the management fee as a profit.

Confidentiality with respect to the contents of the fund portfolio is hence paramount in order to avoid individuals and organisations from trading against and thus harming the interests of the investors in ETF shares. In the ETF context, the confidentiality issue can be partly mitigated by the fund disclosing its portfolio to the MPs only but not to the rest of the market. However, that creates a state of asymmetric information in the market, with the MPs having an informational advantage over other investors at the same time as it interacts with these investors in the secondary market in its role as market maker. The intentional presence of such an information asymmetry obviously violates fundamental market principles.

The objective of the present invention is to create a means for active management of an ETF which minimizes the risk of front running and replication without creating any informational asymmetries in the secondary market.

### Summary of the invention

The above objectives are achieved by an ETF trading system, and by a computer program product in an ETF trading system, according to the independent claims.

Preferred embodiments are set forth by the dependent claims.

The ETF trading system according to the present invention combines the advantages of the ETF structure with the advantages of active portfolio management as a means of achieving superior returns.

The inventive ETF trading system would on a daily basis disclose part of its portfolio. The exact size of the portfolio to be disclosed in relation to the whole portfolio would be caught by a metric called the Portfolio Disclosure Ratio (PDR). The Disclosed Portfolio Securities (DPS), the securities which make up the disclosed part of the portfolio, would be settled by the MP in kind. However, the Non- Disclosed Portfolio Securities (NDPS), would be settled in cash. Both DPS and NDPS are expressed as the capital weighting which the DPS and NDPS represent in relation to the total value of the portfolio. The ratio between DPS and NDPS could e.g. be 3:1, i.e. a 75% PDR. The DPS would be disclosed on a daily basis before start of trading to the whole market, including the MP.

According to a preferred embodiment an indicative intraday NAV per share in real-time is calculated which is made publicly available, e.g. through the investment manager's website and in the systems of large providers of financial information, e.g. Reuters and Bloomberg. This would assist the MP in its market making role, ensuring that prices of the ETF shares over the trading day would not deviate substantially from the intraday NAV.

The inventive ETF trading system would allow ETFs to be actively managed, which is a great advantage compared to traditional ETFs, especially in less efficient markets, where research and a fundamental stock selection process are likely to generate superior returns.

### In the following some unique parts of the ETF trading system will be discussed:

Through the unique concept of a PDR implying a partly disclosed portfolio (the disclosed part being made up by the DPS) while keeping a smaller part (the NDPS) non-disclosed, a mechanism is created to actually keep the benefits of active management while impeding front-running and replication. Since the DPS will be settled in kind, this advantage is achieved while at the same time to a large extent one of the major advantages of the ETF is kept - the lower fees attributable to the in-kind creation and redemption process.

For ETFs which are fully transparent in terms of the composition of their underlying portfolio, the market and the MPs will always have an informed view of what the intrinsic value is at any point in time during regular trading hours and exactly how the value is calculated from the underlying securities. This transparency allows the MP to hedge itself against intraday risk by trading in the underlying portfolio securities.

However, by introducing the concept of NDPS, the MPs and the market will not have full insight into the composition of the portfolio or how its intrinsic value develops during a trading day. This implies that MPs will not be able to perfectly hedge short or long positions in the ETF shares intraday. The level of uncertainty is captured by the PDR with a lower ratio implying a higher uncertainty. In theory, a lower PDR ratio will, ceteris paribus, lead to a widening in the spread between the bid price and ask price committed by the MP in making a market in the ETF shares as a way for the MP to compensate for the uncertainty and increased risk.

However, the below mentioned factors will provide the MP with sufficient comfort to minimize the incremental NDPS driven spread:
1) The MP does know the contents of a part (normally the majority) of the portfolio, corresponding to the DPR.
2) The MP is provided with an intraday NAV calculated by the fund manager. The intraday NAV is calculated by the ETF trading system and then disseminated to the market. This disclosure is in addition to the official NAV calculation which is done on a daily basis by the ETF's custodian and which is also submitted to the market.
3) Some key metrics on the NDPS will preferably be provided to the market, e.g. its beta, which is a measure capturing the statistical correlation between a share or portfolio of shares and an underlying index, and/or a breakdown of the non-disclosed data entities by sector. The knowledge of such key metrics will assist the MP to hedge the NDPS part of the portfolio on an intraday basis.
4) The introduction of so called Portfolio Reflecting Units (PRUs) will allow the MP to hedge their intraday risk in a very effective manner. PRUs is a general term which refers to units which essentially reflect the performance of the underlying fund portfolio and which can be held and traded between MPs and the fund during market hours at which the corresponding ETF shares are traded in the secondary market. As such, the term PRUs describes ETF shares which can be held in treasury at the fund ("treasury shares"), units, "synthetic securities" and other means of securitising the underlying portfolio of the ETF. PRUs will be further described and discussed below in the detailed part of the description.

In practice the MP generates, via its input device, a request of buying or selling PRUs of the portfolio trading database; the request is sent to the fund manager which responds by generating a buying or selling price for these PRUs that is communicated to the MP which then decides whether or not to accept the offer. If the offer is accepted, the PRUs are transferred to the MP in case of buying, and from the MP in case of selling.

When selling PRUs, the fund can get paid either in cash, in kind or a combination of the two, as chosen by the fund at its discretion. In practice it is likely that the consideration is split between an in-kind part and a cash part equivalent to the PDR. Analogously, the MP can offer to sell the PRUs back to the fund at any time, e.g. following a subscription for creation units of ETF shares (which as described previously can be done on a daily basis).

The introduction of PRUs hence allows for a mechanism for the MP to hedge any intraday risk associated with its market making commitment in ETF shares, including the part associated with the NDPS. This enables a more efficient secondary market to develop through the MP employing a more narrow spread and being able to make a market for larger volumes of ETF shares, hence indirectly benefitting all holders of ETF shares who trade in the secondary market. Importantly, the fund takes on no incremental risk by buying and selling the PRUs since the performance of the PRUs are reflecting the performance of the underlying portfolio.

According to a preferred embodiment of the present invention the ETF trading system comprises two share classes, one institutional share class for institutional investors and one ETF share class mainly for retail investors. While non MP investors in the ETF share class can only buy and sell the ETF share in the secondary market, the institutional share class will similarly to the process in traditional mutual funds be bought and sold straight from the fund. The two share classes have the same underlying assets, the fund's portfolio of securities, but may have different fee structures. The institutional share is subscribed for and redeemed in cash. Importantly, institutional investors will be subject to a one-time subscription fee and redemption fee every time they buy or sell shares from/to the fund manager (the ETF share does not have any subscription or redemption fees).

Since transaction fees and management fees are a central part of the ETF concept, the inventive ETF trading system includes, according to a preferred embodiment, a model to achieve total fairness between owners of the two different share classes. When the MP creates or redeems Creation or Redemption units in an actively managed ETF, the action gives rise to transaction costs for the fund as it needs to buy or sell securities to/from the underlying portfolio. Assuming that the transaction cost is the same for all portfolio securities, the incurred transaction cost to the fund is (1-PDR) * average transaction costs. The remaining transaction costs, i.e. the transaction costs for the DPS which are settled/delivered in kind, are paid by the MP.
When an investor subscribes for or redeems the institutional share, this gives, since the shares are settled in cash, rise to transaction costs for the fund as it needs to buy/sell securities to/from the underlying portfolio. Hence, to achieve an equitable fee structure between the ETF shareholders and the shareholders of the institutional share, the investors in the institutional share should pay a subscription and redemption fee equal to (the size of subscription/redemption) * (the average transaction cost) * (average PDR). The subscription and redemption fee should be charged for the benefit of the fund in order to compensate the fund for the incurred transaction costs. The average PDR may be determined as the average over the last week, last month or average over the last year, or any other time period of relevance.

### Example:

Average transaction cost for buying/selling all securities = 50 bps (0.50%)
Average PDR = 80 %
Subscription and redemption fee for the institutional share = (50 bps) * (80%) =40 bps.

According to still another preferred embodiment of the present invention market participants will be able to manage the risk associated with having part of the portfolio as NDPS which cannot be perfectly hedged by having the opportunity to buy or sell PRUs from/to the fund intraday. PRUs do not influence the performance of the fund since their performance only mirror the performance of the other portfolio securities. The benefit of accepting PRUs would be to assist the MP with making a market in the ETF shares since the MP, if it has to meet large buy or sell orders in the secondary market, can simultaneously offset the incremental risk by interacting with the fund. Hence, the MP does not have to take on the risk associated with the NDPS' performance until the time when the MP can make the subscription/redemption of ETF shares and hence should result in the MP being able to offer tighter spreads and making a market for larger volumes when making a market in the ETF shares. Similarly, the fund can acquire PRUs from the MP which can either be cancelled or sold at a later point.
Thus, one of the unique features of the ETF trading system according to the present invention is that it facilitates for the fund to own PRUs, e.g. in the form of treasury shares.

### Short description of the appended drawings

Figure 1 shows a block diagram schematically illustrating the ETF trading system according to the present invention.
Figure 2 shows a flow diagram illustration the transaction between the market participant and the fund manager.

### Detailed description of preferred embodiments of the invention

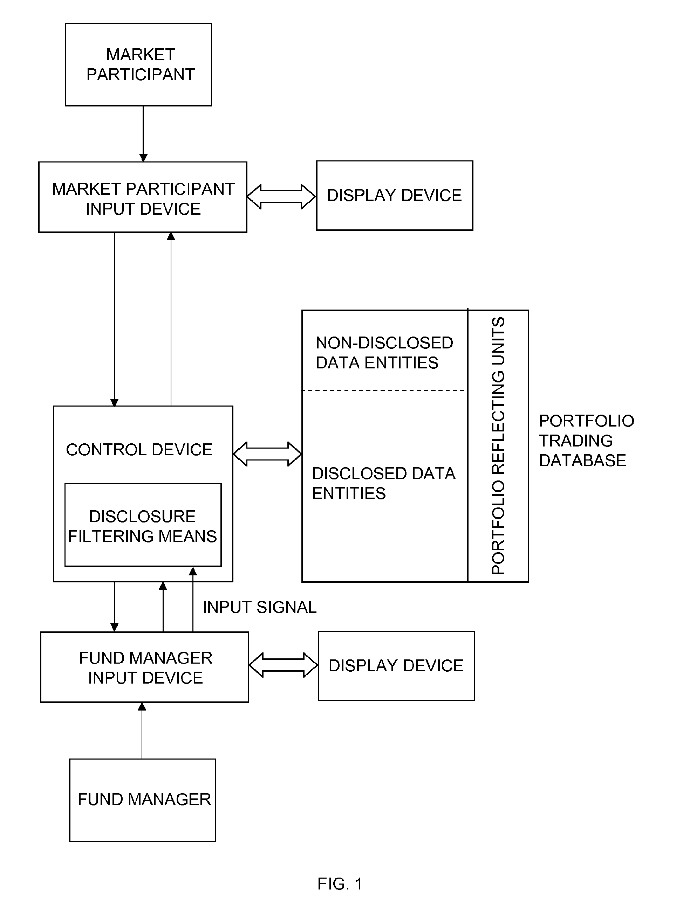

With references to figure 1 the computerized trading system adapted to handle trading of Exchange Traded Funds (ETFs) will be described in more detail.
Each ETF comprises portfolio securities represented by portfolio security data entities stored in a portfolio trading database, the system further comprises a control device connected to, and controlling, the portfolio trading database, at least one market participant input device, and a fund manager input device. All input devices being connectable to the control device, and each input device being connected to a display device provided with a graphical user interface.
The market participant input device(s) is/are adapted to receive transaction orders from market participants and to transfer the orders in the form of transaction signals to the control device that initiates and performs the transactions.
The portfolio security data entities are divided into disclosed portfolio data entities being accessible via at least one market participant graphical user interface, and non-disclosed data entities only being accessible via the fund manager graphical user interface.
The relationship, denoted as the portfolio disclosure ratio (PDR), between the disclosed portfolio data entities and the portfolio security data entities is typically in the range of 60-90%. The control device is provided with a disclosure filtering means that is controlled via input signals from the fund manager input device to determine which portfolio data entities to be disclosed portfolio data entities, and which portfolio data entities to be non-disclosed data entities.

The ETF is preferably actively managed, i.e. the ETF fund's portfolio manager is attempting to through research and analysis outperform an index as opposed to replicate the performance of an index.

A daily calculation of the official portfolio NAV is done by a third party, the custodian, which holds all the securities of the portfolio.

According to a preferred embodiment, the control device is adapted to calculate an intraday NAV in real-time, based upon input from the fund manager and based upon the disclosed and non-disclosed portfolio security data entities. The intraday NAV in real time is dependent on the receipt of data from a third party data provider such as Bloomberg or Reuters.

In accordance with another preferred embodiment one or many predefined key metrics regarding the non-disclosed data entities will be made available to the market participant via the market participant display device. These metrics may e.g. be the beta of the ETF, which is a measure capturing the statistical correlation between a share, or portfolio of shares, and an underlying index and also e.g. a breakdown of the non-disclosed data entities by sector.

When the market participant creates or redeems Creation or Redemption shares respectively, the action gives rise to transaction costs for the fund and that the incurred transaction cost to the fund is calculated, by the control device, as (1-PDR) * average transaction costs.

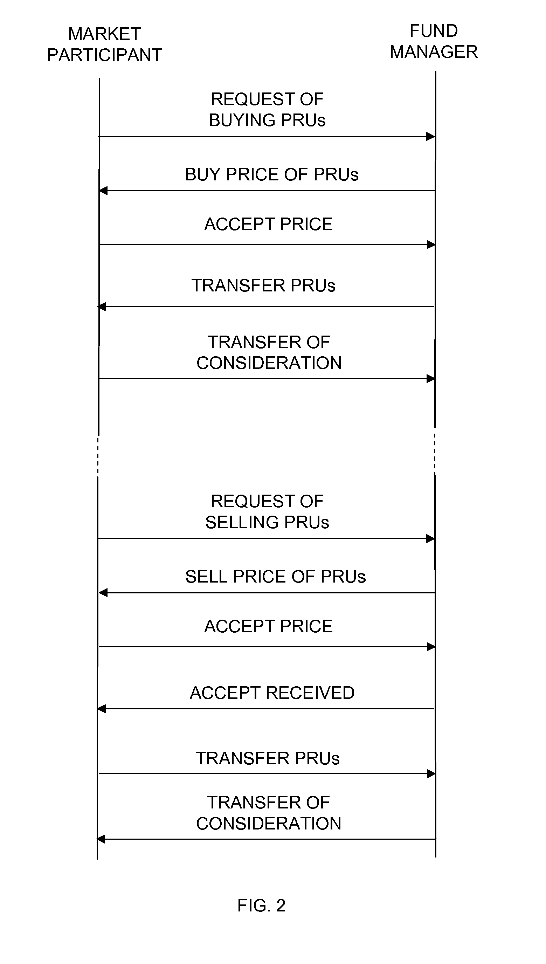

Figure 2 shows a flow diagram illustration transaction between the market participant (MP) and the fund manager (FM). Thus, as mentioned above, the interaction between the fund and the market participant is achieved by means of the PRUs or by creation or redemption of creation/redemption units. In the upper part of the figure a procedure when buying PRUs is illustrated and in the lower part a procedure when selling PRUs is illustrated. In the figure, MP designates market participant and FM designates fund manager.

One exemplifying procedure may be that the fund manager via its input device sets a price which is transferred to the graphical user interface of the MP. Then the MP either transfers a yes or a no to perform the transaction to the FM graphical user interface. If the MP accepts to perform the transaction the FM clicks execute and the transaction is done, including transfer of PRUs to the MP and transfer of consideration (payment) from MP to FM.

The present invention will allow for a possibility for the MP to intraday fully hedge itself without knowing the full contents of the underlying portfolio. This will be done through the creation of portfolio reflecting units (PRUs). The presence of PRUs does not alter the NAV per share of the fund, or the performance of the fund since the performance of the PRUs would only mirror the performance of the other portfolio securities.

In order to further clarify the selling/buying procedure, the fund, through holding PRUs, essentially holds units in itself which in its interaction with the MP it can at its discretion choose to, at the request of the MP, quote prices in and, if the MP wants to go ahead with a transaction, sell or buy to/from the MP. Importantly, such a transaction can take place any time during the trading day. The prices at which the fund buys or sells PRUs are set by the fund. A practical example of how PRUs can be realised is through treasury shares. If the fund structure is a limited liability company, it can on its accounts hold treasury shares, i.e. shares in itself.

The creation of PRUs allows for the transfer and subsequent elimination of risk intraday. The MP, which experiences a risk when making a market in an asset for which it, due to the presence of NDPS, does not at all times know its full contents, is allowed to transfer this risk to the fund. Since the performance of the PRUs are mirroring the fund's performance, the risk is eliminated when it is transferred to the fund.

As a practical example, consider an MP which is making a market in ETF shares. Early in the morning of a trading day, a major buyer of ETF shares emerges in the market. As a market maker, the MP has committed to make a market in the ETF shares and hence has to sell the ETF shares to the buyer. If the MP knows the exact contents of the portfolio, it is able to upon its sale of ETF shares to the major buyer hedge this risk by simultaneously in the market acquiring the underlying securities corresponding to the number of ETF shares. To make up for the decrease in ETF shares on the MP's books, it will make a subscription for an additional number of ETF creation units with the fund. However, if the MP does not know the full contents of the portfolio, it will not be able to perfectly hedge this risk.

PRUs allow the MP to hedge a similar exposure without knowing the full contents of the portfolio, i.e. in a context where NDPS are present. Upon receiving the major buy order in the morning, the MP can buy a similar amount of PRUs from the fund. The value of these PRUs will develop over the day exactly as the NAV of the underlying portfolio.

The present invention further comprises a computer program product for use in a computerized Exchange Traded Fund (ETF) trading system where each ETF comprises portfolio securities represented by portfolio security data entities stored in a portfolio trading database, wherein the program, when executed by the control device, performs the following steps:
- determining, in dependence of an input signal from a fund manager input device to a disclosure filtering means, arranged in the control device, which portfolio data entities to be disclosed portfolio data entities being accessible via at least one market participant graphical user interface, and which portfolio data entities to be non-disclosed data entities only being accessible via the fund manager graphical user interface;
- displaying disclosed portfolio data entities to the market participant, wherein the disclosed portfolio data entities being 60-90% of all portfolio security data entities stored in said portfolio trading database, the relationship being denoted as the portfolio disclosure ratio (PDR),
- receiving transaction orders from market participants, and
- transferring said orders in the form of transaction signals to said control device that initiates and performs said transactions.

Preferably, the program performs the step of transferring the orders by transfer of, intraday, PRUs being a part of the portfolio security data entities which is an essentially exact reflection of the rest of the portfolio trading database, said reflecting units being owned by the fund itself. The program also facilitates the transfer of orders of creation and redemption units in exchange for the corresponding baskets of securities and cash, said orders being possible to make by the MP in the primary market on a daily basis.

Furthermore, the computer program product performs the step of calculating an intraday NAV in real-time based upon the portfolio security data entities.

According to a preferred embodiment the program performs the step of making available to the market participant one or many predefined key metrics regarding the non-disclosed data entities via a market participant display device, where the predefined metrics being e.g. the beta of the ETF which is a measure capturing the statistical correlation between a share or portfolio of shares and an underlying index and also e.g. a breakdown of the non-disclosed data entities by sector (e.g. the oil industry, consumer goods, etc.).

And, in accordance with a further embodiment of the present invention the computer program product is adapted to perform the step of calculating the incurred transaction cost to the fund, as (1-PDR) * average transaction costs when the market participant has created or redeemed Creation or Redemption shares. In addition it also calculates the fees which apply to buyers/sellers of shares in the institutional share class, being PDR * average transaction cost.

The present invention is not limited to the above-described preferred embodiments. Various alternatives, modifications and equivalents may be used. Therefore, the above embodiments should not be taken as limiting the scope of the invention, which is defined by the appending claims.

## Claims

1. Computerized trading system adapted to handle trading of Exchange Traded Funds (ETFs), where each ETF comprises portfolio securities represented by portfolio security data entities stored in a portfolio trading database, the system further comprises a control device connected to, and controlling, said portfolio trading database, at least one market participant input device, and a fund manager input device both being connectable to said control device, each input device being connected to a display device provided with a graphical user interface, wherein the market participant input device(s) is/are adapted to receive transaction orders from market participants and to transfer said orders in the form of transaction signals to said control device that initiates and performs said transactions, **characterized in that** said portfolio security data entities are divided into disclosed portfolio data entities being accessible via at least one market participant graphical user interface, and non-disclosed data entities only being accessible via the fund manager graphical user interface, wherein the relationship, denoted as the portfolio disclosure ratio (PDR), between the disclosed portfolio data entities and the portfolio security data entities, is in the range of 60-90%, and **in that** said control device comprises a disclosure filtering means controlled via input signals from said fund manager input device to determine which portfolio data entities to be disclosed portfolio data entities, and which portfolio data entities to be non-disclosed data entities.

2. Computerized trading system according to claim 1, wherein said transactions are performed by transferring portfolio reflecting units (PRUs) being a part of the portfolio security data entities which is an essentially exact reflection of the rest of the portfolio trading database, and that said reflecting units being owned and tradable in the market by the fund itself.

3. Computerized trading system according to claim 2, wherein said transactions of PRUs are performed intraday.

4. Computerized trading system according to claims 2 or 3, wherein the market participant generates a request to buy or sell said PRUs to the fund manager via said market participant input device.

5. Computerized trading system according to claim 1, wherein an intraday NAV is calculated, by said control device, in real-time based upon the portfolio security data entities.

6. Computerized trading system according to claim 1, wherein the ETF is actively managed.

7. Computerized trading system according to claim 1, wherein one or many predefined key metrics regarding the non-disclosed data entities will be made available to the market participant via the market participant display device.

8. Computerized trading system according to claim 7, wherein said predefined metrics being the beta of the ETF which is a measure capturing the statistical correlation between a share, or portfolio of shares, and an underlying index and/or a breakdown of the non-disclosed data entities by sector, e.g. oil industry, consumer goods etc.

9. Computerized trading system according to claim 1, wherein when the market participant creates or redeems Creation or Redemption units, the action gives rise to transaction costs for the fund and that the incurred transaction cost to the fund is calculated, by the control device, as (1-PDR) * average transaction costs.

10. Computerized trading system according to claim 1, wherein the transaction cost, which should be paid by buyers/sellers of the institutional share, is continuously calculated, by the control device, as PDR * average transaction cost.

11. A computer program product for use in a computerized Exchange Traded Fund (ETF) trading system where each ETF comprises portfolio securities represented by portfolio security data entities stored in a portfolio trading database, the system further comprises a control device connected to, and controlling, said portfolio trading database, wherein the program, when executed by said control device performs the following steps:
- determining, in dependence of an input signal from a fund manager input device to a disclosure filtering means, arranged in said control device, which portfolio data entities to be disclosed portfolio data entities being accessible via the at least one market participant graphical user interface, and which portfolio data entities to be non-disclosed data entities only being accessible via the fund manager graphical user interface;
- displaying disclosed portfolio data entities to the market participant, wherein said disclosed portfolio data entities typically being 60-90% of all portfolio security data entities stored in said portfolio trading database, the relationship being denoted as the portfolio disclosure ratio (PDR),
- receiving transaction orders from market participants, and
- transferring said orders in the form of transaction signals to said control device that initiates and performs said transactions.

12. Computer program product according to claim 11, wherein the transaction order between the market participant and fund manager is performed via generating said transaction signals to buy or sell portfolio reflection units (PRUs) to the fund manager intraday via said market participant input device, wherein said PRUs being a part of the portfolio security data entities which is an essentially exact reflection of the rest of the portfolio trading database, said reflecting units being owned and tradable by the fund itself.

13. Computer program product according to claims 11 or 12, wherein the program performs the step of calculating an intraday NAV in real-time based upon the portfolio security data entities.

14. Computer program product according to claim 11, wherein the program performs the step of making available to the market participant, one or many predefined key metrics regarding the non-disclosed data entities via a market participant display device.

15. Computer program product according to any of claims 11-14, wherein the program performs the step of calculating the incurred transaction cost to the fund, as (1-PDR) * average transaction costs when the market participant has created or redeemed Creation or Redemption units, respectively.
